# EUROPEAN PATENT APPLICATION

(11) **EP 4 624 158 A1**
(43) Date of publication of application: **01.10.2025**
(21) Application number: 24461552.2
(22) Date of filing: 26.03.2024
(51) Int. Cl.: B33Y 80/00, F28D 9/00, F28F 3/02, F28F 3/04

(54) **HEAT EXCHANGER CORE LAYER PIN**

(71) Applicant: Hamilton Sundstrand Corporation, Charlotte, NC 28217 (US)
(72) Inventor: MECZKOWSKI, Tomasz, 51-317 Wroclaw (PL); SIUDZINSKI, Hubert Jan, 51-317 Wroclaw (PL); KALUZA, Przemyslaw Stanislaw, 51-317 Wroclaw (PL)
(74) Representative: Dehns

(57) **Abstract**

A pin for a core layer of a heat exchanger past which fluid flowing through the layer passes, the pin having a leading edge, a trailing edge, a first and a second end and, an outer surface between leading edge and trailing edge and the first and second ends, and wherein the outer surface has a grooved configuration, and wherein the leading edge forms a pointed face via which incoming fluid is separated into a first flow along one side of the grooved outer surface and a second flow along an opposite side to the grooved outer surface from the leading edge to the trailing edge.

## Description

### TECHNICAL FIELD

The present disclosure relates to a pin for a heat exchanger, a layer for a heat exchanger, a heat exchanger, and a method of making a layer for a heat exchanger.

### BACKGROUND

Heat exchangers are used in many fields and exist in many forms. Typically, heat exchangers involve the transfer of heat between a first and a second fluid flowing in adjacent channels or layers of the heat exchanger. Many heat exchanger designs have a flowpath defined between an inlet of the heat exchanger and an outlet of the heat exchanger, and between fluid flow layers separated by plates that extend between the inlet and outlet. Heat exchange to or from a fluid flowing in the flowpath occurs primarily through the plates. It is known to provide pins or fins that extend in the flowpath, between the plates, to improve the heat transfer and create turbulence in the fluid flow. Various pin or fin shapes are known including cylindrical, triangular, rectangular or teardrop cross-sectional shapes.

Such conventional heat exchangers have generally been considered satisfactory for their intended purpose but there is a need in the art for improved heat exchangers.

### SUMMARY

According to a first aspect, there is provided a pin for a core layer of a heat exchanger past which fluid flowing through the layer passes, the pin having a leading edge, a trailing edge, a first and a second end and, an outer surface between leading edge and trailing edge and the first and second ends, and wherein the outer surface has a grooved configuration, and wherein the leading edge forms a pointed face via which incoming fluid is separated into a first flow along one side of the grooved outer surface and a second flow along an opposite side to the grooved outer surface from the leading edge to the trailing edge.

In one embodiment, the leading edge forms a pointed face having a leading point and a groove extending outwards either side of the leading point.

In another embodiment, the pointed face is the point of an arrowhead shape at the leading edge.

Also provided is layer for a heat exchanger, the layer comprising: an inlet; an outlet; an upper sheet; a lower sheet; a fluid flowpath defined between the upper sheet and lower sheet and from the inlet to the outlet; and at least one pin, as defined above. disposed in the flowpath and connecting the upper sheet to the lower sheet.

Defining a fluid flowpath between upper and lower sheets where the fluid flows past pins formed with such a shape increases the turbulence of the fluid flow in the flowpath. By increasing the turbulence of the fluid flow, the heat transfer of the heat exchanger layer is increased. Furthermore, the pins having an increased primary heat transfer area compared to conventional/smooth pins, whilst minimising the pressure drop of the fluid passing the pin.

The layer may comprise a plurality of such pins disposed in the flowpath, each pin connecting between the upper sheet and lower sheet and having a pin height defined between the upper and lower sheet.

At least one of the upper sheet and the lower sheet may be formed from an aluminium alloy, a titanium alloy, an austenitic nickel-chromium-based superalloy, stainless steel or copper.

According to another aspect, there is provided a heat exchanger comprising a first layer and a second layer; wherein the first layer is a layer according to the preceding aspect; wherein the second layer is a layer according to the preceding aspect; and wherein the upper sheet of the second layer is also the lower sheet of the first layer.

The average distance between the upper and lower sheets of the first layer may be different from the average distance between the upper and lower sheets of the second layer. Put another way, the first layer may have a different average height from the second layer. The number of pins disposed in the flowpath of the first layer may be different from the number of pins disposed in the flowpath of the second layer.

A pin pattern of the pin(s) disposed in the flowpath of the first layer may be different from a pin pattern of the pin(s) disposed in the flowpath of the second layer.

According to another aspect, there is provided a method of manufacturing such a pin for a heat exchanger using additive manufacture.

Using additive manufacturing allows pins to be created having the required shape. The method may comprise additively manufacturing a plurality of pins on the lower sheet.

The method may comprise providing a sidewall extending between the lower sheet and the upper sheet; and optionally additively manufacturing one or more sets of turning vanes on the lower sheet at the same time as additively manufacturing the or each pin.

Additively manufacturing the sidewall may be simpler than using traditional manufacturing techniques. Turning vanes may be desirable in layers having a non-straight flow path, e.g. a U-shaped flow path, and additively manufacturing these may be simpler than using traditional (non-additive) manufacturing techniques.
In an example, the sheets may also be manufactured using additive manufacture.

Each step of additive manufacturing may be performed using a metal powder bed SLM additive manufacturing process, or other AM methods.

A powder of the metal powder bed may be one of an aluminium alloy, a titanium alloy, and an austenitic nickel-chromium-based superalloy.

SLM is a relatively mature additive-manufacturing technology and typically allows recovery of unused (i.e. unmelted) powder from the finished article. The unused powder may be used in future additive-manufacturing operations and thus this method may be cost effective by minimizing wastage of (potentially expensive) metal powder.

The heat exchanger constructed in accordance with this aspect may have a compact design allowing for good heat exchange between fluids flowing in their respective pluralities of layers.

### BRIEF DESCRIPTION

Certain embodiments of the present disclosure will now be described in greater detail by way of example only and with reference to the accompanying drawings. It should be noted that these are examples only and variations are possible within the scope of the claims.
Figure 1 shows a perspective view of a heat exchanger;
Figure 2 shows a plan view of a layer within the heat exchanger;
Figure 3 shows a detailed view of pins according to one example of the disclosure, in the heat exchanger;
Figures 4A to 4F show a single pin of the type according to the example of Figure 3, from different views.
Figure 5 shows a detailed view of pins according to another example of the disclosure, in the heat exchanger;
Figures 6A to 6F shows a single pin of the type according to the example of Figure 5, from different views.

### DETAILED DESCRIPTION

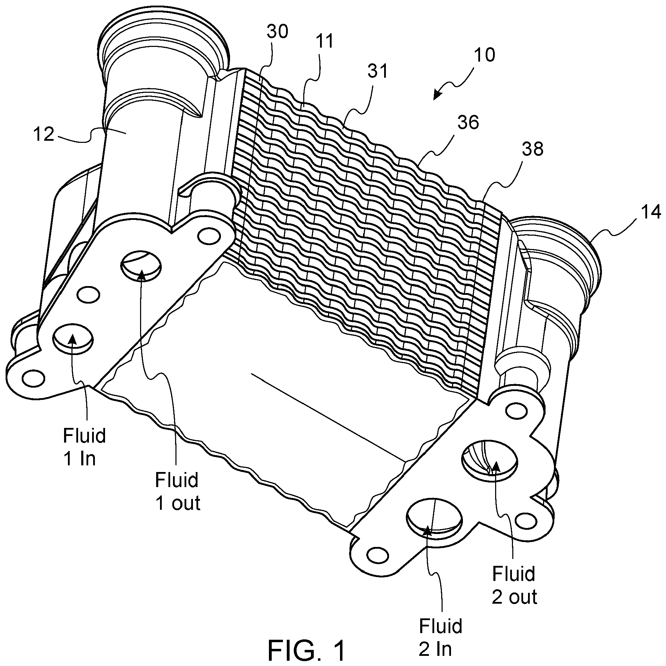

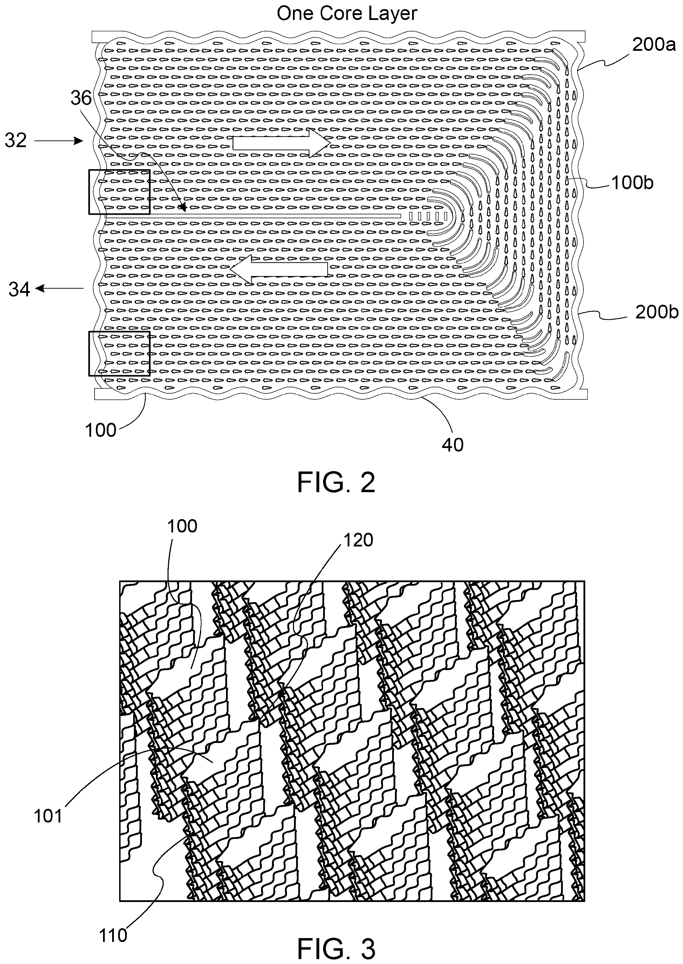

Figure 1 shows a heat exchanger 10 having a heat exchanger core 11, a first header 12 for conveying a first fluid e.g. oil into and out of the core 11, and a second header 14 for conveying a second fluid e.g. oil into and out of the core 11. The heat exchanger may be primarily used to exchange heat between the first fluid and the second fluid. However, heat may also be exchanged out through the sidewall 40 (Fig. 2) as well as out of the top and bottom sides of the heat exchanger core 11. The first and second fluids may be oil - in an oil-oil cooler (OOC), but other fluids, including water or air may also be used.

The first header 12 connects to a first plurality of layers 30 of the heat exchanger core 11. The second header 14 connects to a second plurality of layers 31 of the heat exchanger core 11. The first plurality of layers 30 is interleaved with the second plurality of layers 31 so that the first fluid flows through every second layer and the second fluid flows through the layers in-between the first fluid layers, providing alternate layers of first fluid flow and second fluid flow. The individual layers are typically rotated 180 degrees relative to each other. At least within the heat exchanger 10, the first fluid flowing in the first plurality of layers 30 is fluidly isolated from the second fluid flowing in the second plurality of layers by the sheets separating the layers. Fig. 2 shows one core layer 30. Any layer of the first and second pluralities of layers may be a layer 30 as shown in Figure 2.

As shown in Figure 2, the layer 30 comprises an inlet 32 and an outlet 34, a sidewall 40, and (not shown in Fig. 2) an upper sheet, and a lower sheet 38. In use, fluid is constrained by the upper sheet, lower sheet 38, and sidewall 40, so as to flow from the inlet 32, through the layer 30, to the outlet 34. That is, the upper sheet, lower sheet 38, and sidewall 40 together define a flowpath for fluid flowing in the layer 30. The layer 30 shown in Figure 2 defines a generally U-shaped flowpath, indicated by the arrows in Fig. 2, between the inlet 32 and outlet 34, with the inward flow separated from the outward flow by a separation bar 36. The upper sheet (not shown) of a given layer, may simultaneously function as the lower sheet 38 of layer (e.g. layer 30) immediately above.

With reference to Figure 1, a first portion of the first header 12 connects to the inlet side 32 of each layer 30 of the first plurality of layers, and, in use, fluid is pumped into the first portion and flows into the inlet side 32 of every layer connected to the first header 12. The fluid flows through each of the layers 30 and out through the outlet 34 of each layer of the first plurality of layers. The outlets 34 are all connected to a second portion of the first header 12, the second portion being fluidly isolated from the first portion. Fluid flows into the second portion and then out of the first header 12.

Similarly, a first portion of the second header 14 connects to the inlet side 32 of each layer 31 and, in use, fluid is pumped into the first portion and flows into the inlet side 32 of every layer connected to the second header 14. The fluid flows through each of the layers 31 and out through the outlet 34 of each layer. The outlets 34 are all connected to the second portion of the second header 14, the second portion being fluidly isolated from the first portion. Fluid flows into the second portion and then out of the second header 14.

Within each layer 30, as shown in Figure 3, one or more pins 100 are disposed in the fluid flowpath. Each pin 100 extends between the lower sheet 38 and the upper sheet (not shown in Fig. 3).

Additionally, (best seen in Fig. 2) there may be provided within each layer 30 a first set of turning vanes 200a that may turn the flow through 90 degrees, and a second set of turning vanes 200b that may turn the flow through a further 90 degrees, to create the overall U-shaped flow path. A plurality of pins 100b may be disposed between the first and second sets of turning vanes 200a, b. The pins 100 shown in Figure 3 are all arranged within the layer 30 such that each pin 100 faces directly into a local flow direction.

Figure 3 shows the shape of the pins 100, 100b in more detail. In the direction from the lower sheet to the upper sheet or vice versa, the pins have pin body 101 extending between a first end 110 and a second end 120. The cross section of the pin 100, in the plane across the ends 110, 120 may take a variety of shapes e.g. triangular, rectangular, teardrop shaped., oval, circular, etc. The ability to manufacture the pins using additive manufacturing means that there is much more flexibility in the shapes that can be produced. The cross-section in the example shown is shaped such that the width of the pin tapers in the direction of fluid flow.

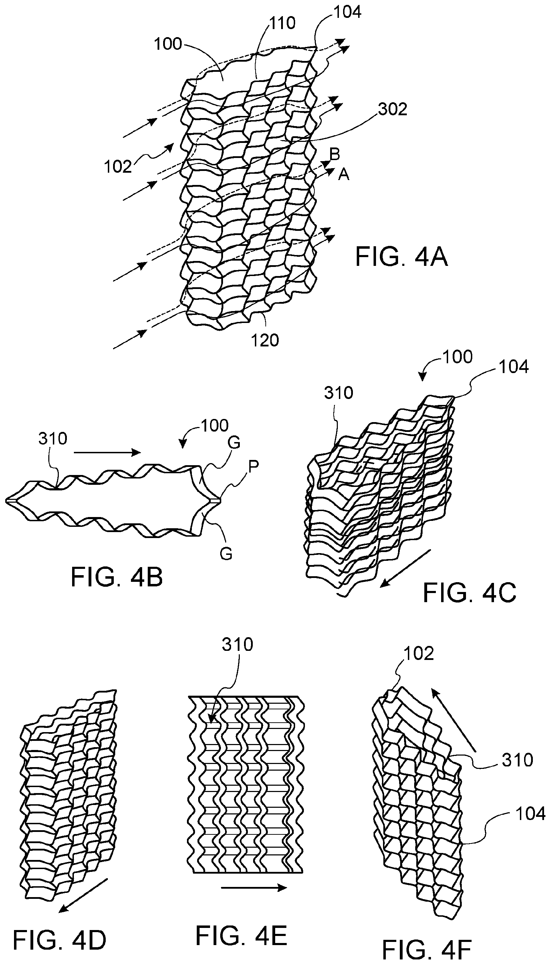

Figures 4A to 4F show the shape of a pin 100 according to one example of the disclosure. The pin has a leading edge 102 facing the fluid flow towards the pin, and a trailing edge 104, a first end 110 and a second end 120.

As can be best seen in Figs. 4A to 4F, the pin 100 extends from the first, top end 110 and an opposite, bottom end 120. In use, the pin 100 has its bottom end attached to core layer of the heat exchanger. The other end is attached to or close to an adjacent layer. The cross-sectional shape of the pin 100 of this example is shown as shape in which the width of the pin core generally tapers from the leading edge 102 to the trailing edge 104. This is just one example, and the pin core can have other cross-sections. The pin core therefore has an outer surface 302 defined between the first end second ends and extending on both sides of the pin from the leading edge to the trailing edge.

The outer surface 302 is formed as a grooved or wavy outer surface defining a grooved or wavy profile in the direction from the leading edge to the trailing edge.

The grooves 310 provide an interruption to fluid flow past the pin that introduces turbulence into the fluid flow, thus increasing the heat transfer characteristics of the pin and, further, increases the heat transfer area of the pin.

In the first example shown in Figs. 4A to 4F, the pin is formed with grooves 310 along the outer surface 302 forming a grooved or wavy profile in the direction from the leading to the trailing edge and is also grooved in the direction from the top to the bottom of the pin body - i.e. defining grooves or waves in two dimensions - in the direction of flow from the leading to the trailing edge. The pin at the leading edge is also formed with grooves in both horizontal and vertical planes. The impact of this shape on the fluid flow past the pin can be seen by the arrows A and B, showing fluid flow. The fluid first meets the leading edge 102 where it is directed, by the grooves, around the sides of the pin and along the grooved outer surface. The fluid flows towards the trailing end across both sides of the wavy outer surface, the grooves in the two dimensions combining to form a chequerboard-type groove pattern, which creates turbulence in the fluid flow passing the pin. Where several such pins are arranged in an array across the core layer, turbulence increases, so significantly improving the heat transfer characteristics of the core.

In this first example, the leading end of the pin is formed as best seen in FIG. 4A defining a leading point, P, presenting to the incoming fluid, and grooves, G, formed either side of the leading point. The grooves, G, smoothly separate the incoming fluid flow to travel along both sides of the outer surface towards the trailing edge. The result of the shape of the leading end and the double groove formation is that the pin has both a lateral (from leading to trailing end) wavy or zig-zag sweep and a vertical (i.e. from top to bottom) wavy or zig-zag sweep.

As seen in Fig. 4C, the leading edge 102 presents a short side face with a swept arc shape defined by the grooves extending from the leading point P. Fig. 4E shows the longitudinal sweep from leading to trailing edge, viewed from the side. Fig. 4F shows, most clearly, the vertical zig-zag or sweep at the trailing edge.

Referring back to Fig. 1, fluid 1 and fluid 2 flow are separated and set to be a counter-flow. Each of them occupies a separate core layer, but flow through layers looks similar for both fluids. Fluid 1 and fluid 2 layers can have different pin patterns, and different height, to better meet thermal performance and pressure drop requirements for each stream. The pin pattern is parametric and can be easily adjusted, depending on the circumstances. Fluid enters the layer through the inlet and meets the double grooved pins. The leading edge of each pin has a pointed surface face shape, P, to smoothly separate through the incoming flow. The wavy outer surface of the pin enhances the amount of high energy flow to the downstream pins, decreasing pressure build-up at the same time, causing lower dP and the chequered grooves provide high heat transfer coefficients at this part of the pin. One can also observe a swing action of the pins' leading edges, energizing walls of adjoining rows. Due to the wavy shape of the grooves, the overall area of heat transfer increases and the flow causing a permanent disturbance of the velocity field, which results in intensive mixing of fluid particles (i.e. makes the flow more turbulent). In addition, the double grooved pins have increased heat transfer area compared to the conventional/straight pins.

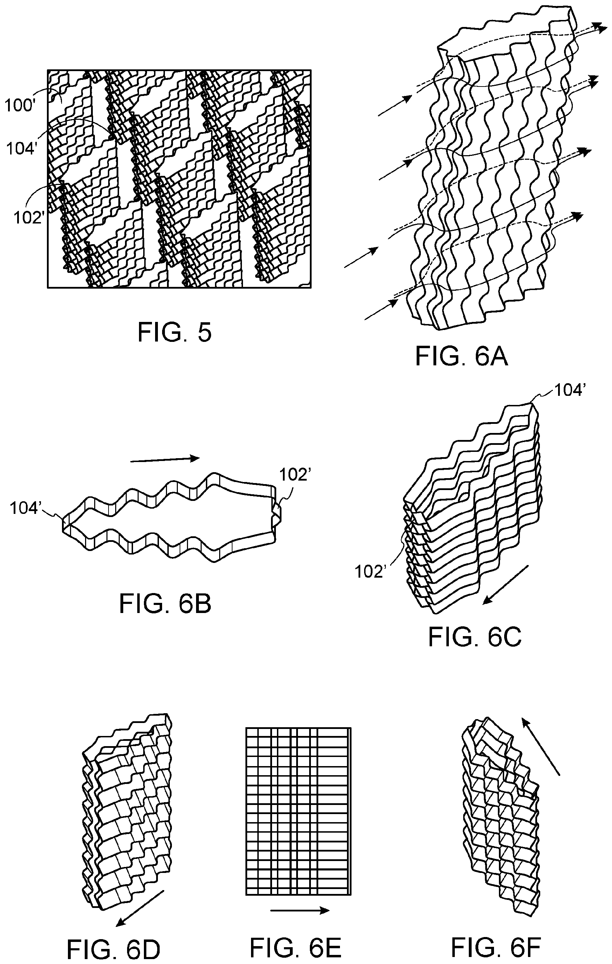

In an alternative example, as shown in Figs. 5 and 6A to 6F, the pins 100' have a leading edge, here 102', in the form of an arrowhead configuration as best seen in Figs. 6A and 6B. Again, the arrowhead shape acts to smoothly separate the incoming flow by smoothly slicing through the incoming flow. In the lateral direction, from leading edge 102' to trailing edge 104', the pin 100' has a grooved or wavy shape. As seen in Fig. 6C, the arrowhead shape provides a long side face. The lateral sweep provides a rectangular cross-section as seen in Fig. 6E. As a result, the trailing edge has a horizontal zig-zag sweep as best seen in Fig. 6F. As with the previous embodiment, fluid 1 and fluid 2 flow are separated and set to be a counter-flow. Each of them occupies a separate core layer but flow through layers looks similar for both fluids. Fluid 1 and fluid 2 layers can have different pin pattern, and different height. The pin pattern is parametric and can be easily adjusted, depending on the circumstances. Fuel enters the layer through an inlet and meets the arrowhead grooved pins. The leading edge 102' of the pin 100' has an arrowhead shape to smoothly slice through the incoming flow. The wavy outer surface of the pin enhances the amount of high energy flow to the downstream pins, decreasing pressure build-up at the same time, causing lower dP, and the chequered grooves provide high heat transfer coefficients at this part of the pin. Due to the wavy shape of the grooves, the overall area of heat transfer increases and the flow causing a permanent disturbance of the velocity field, which results in intensive mixing of fluid particles (i.e. makes the flow more turbulent). In addition, the arrowhead grooved pins have increased heat transfer area compared to the conventional/straight pins.

The pin shape creates turbulence in the fluid flow thus leading to improved thermal exchange. The shape disturbs the flow of the fluid causing a permanent disturbance of the velocity field, which results in intensive mixing of the fluid particles making the fluid more turbulent. This turbulence is magnified due to the plurality of pins in the layer. The increased turbulence increases the heat transfer coefficient and, thereby, the efficiency of the heat exchanger. Further, the pin shape increases the surface area for the fluid, and hence the heat transfer area, of the pin compared to conventional pins which have a straight outer surface.

In a heat exchanger core, as described above, several such layers will be provided, separated by the sheets. Fig. 2 shows just one such layer but the principle will be the same for each layer.

It is possible that the number of pins and/or the pattern in which the pins are arranged is the same for each layer, but it is also feasible that different layers have different numbers of pins and/or patterns of pins. The layers may also be the same height (defined between the sheets) or different layers may have different heights depending on the application.

The pins according to this design may or may not be used in the turnaround section of the heat exchanger.

As the fluid, e.g. oil, enters the heat exchanger through the inlet side 32 it meets a set of pins, which may be configured as described above. Vortices form at the fins, thus increasing the efficiency of the heat exchanger. Downstream, as the fluid passes more sets of pins, the flow becomes highly turbulent and, further, the heat transfer surface area is increased due to the fins.

At the end of the first portion of the layer, the flow is turned by 90 degrees by the pins in the turning section and then returns, past pins, in the return portion of the layer to the outlet side.

Any or all parts of the heat exchanger 10 other than the pins may be made from metal. In some embodiments, some or all parts are made from an austenitic nickel-chromium-based superalloy, such as the Inconel family of metals manufactured by the Special Metals Corporation of New York state, USA. In other embodiments, some or all parts may be made from an aluminium alloy, a titanium alloy, stainless steel or copper.

The first and second fluids may be oil, such that the heat exchanger 10 is an oil-oil heat exchanger. In other embodiments, however, the first fluid may be different from the second fluid. Other fluids, including air, water, fuel(s), or carbon dioxide are also envisaged for either or both of the first and second fluids.

The pin design according to this disclosure has improved fluidic and thermal heat exchange properties compared to conventional smooth/straight surface pins. Because of this, a heat exchanger can have fewer layers than is conventional to achieve the same performance. This provides cost, assembly, size and weight savings. By making the pins using additive manufacture, the precise design can be easily adjusted/modified according to the requirements of the application.

## Claims

1. A pin for a core layer of a heat exchanger past which fluid flowing through the layer passes, the pin having a leading edge, a trailing edge, a first and a second end and, an outer surface between leading edge and trailing edge and the first and second ends, and wherein the outer surface has a grooved configuration, and wherein the leading edge forms a pointed face via which incoming fluid is separated into a first flow along one side of the grooved outer surface and a second flow along an opposite side to the grooved outer surface from the leading edge to the trailing edge.

2. A pin according to claim 1, the pin core having a cross-section that generally tapers from the leading edge to the trailing edge.

3. A pin according to claim 1 or 2, wherein the pointed face comprises a leading point (P) and a groove (G) extending outwards either side of the leading point (P).

4. A pin according to claim 1 or 2, wherein the pointed face comprises a leading point (P) of an arrowhead configuration.

5. A pin according to any preceding claim, wherein the grooved configuration comprises grooves forming a wavy profile extending across the outer surface from the leading edge to the trailing edge.

6. A pin according to claim 5, wherein the grooved configuration further comprises grooves forming a wavy profile extending in the direction from the first end to the second end.

7. A layer for a heat exchanger, the layer comprising:
an inlet (32);
an outlet (34);
an upper sheet;
a lower sheet;
a fluid flowpath defined between the upper sheet and lower sheet and from the inlet to the outlet; and
at least one pin (100) as defined by any preceding claim, disposed in the flowpath and connecting the upper sheet to the lower sheet

8. The layer of claim 7, having a plurality of said at least one pin (100).

9. The layer of claim 8, the layer defining an inflow path from the inlet, and an outflow path to the outlet, the inflow path and the outflow path being separated in the layer by a separation bar, the inflow path and the outflow path each having a plurality of said pins, the layer further comprising a plurality of turning vanes to turn the direction of flow from the inflow path by substantially 180 degrees to the outflow path.

10. The layer of claim 9, wherein the plurality of turning vanes includes a first plurality of vanes to turn the direction of flow from the inflow path by substantially 90 degrees and a second plurality of turning vanes to turn the direction of flow by a further 90 degrees to the outflow path.

11. A heat exchanger comprising a first layer and a second layer;
wherein the first layer is a layer according to any of claims 7 to 10;
wherein the second layer is a layer according to any of claims 7 to 10; and wherein the upper sheet of the second layer is also the lower sheet of the first layer.

12. A method of additively manufacturing a pin for layer for a heat exchanger, the method comprising:
additively manufacturing a pin as claimed in any of claims 1 to 6.
